# FASCICULE DE BREVET EUROPEEN

(11) **EP 2 454 152 B1**
(45) Date de publication et mention de la délivrance du brevet: **20.04.2016**
(21) Numéro de dépôt: 10726089.5
(22) Date de dépôt: 23.06.2010
(51) Int. Cl.: B64C 25/18, B64C 25/50

(54) **TRAIN AVANT D'AERONEF A DISPOSITIF DE COMMANDE UNIQUE POUR LE RELEVAGE ET LA DIRECTION**
BUGFAHRWEK MIT STELLVORRICHTUNG, WELCHE SOWOHL DAS EINFAHREN DES FAHRWEKS ALS AUCH DESSEN LENKUNG BEWERKSTELLIGT
NOSE LANDING GEAR WITH ACTUATING DEVICE FOR GEAR RETRACTION AS WELL AS FOR THE STEERING

(30) Priorité: 15.07.2009 FR 0903451
(43) Date de publication de la demande: 23.05.2012
(73) Titulaire: Messier-Bugatti-Dowty, 78140 Vélizy-Villacoublay (FR)
(72) Inventeur: MOINE, Daniel, F-91600 Savigny Sur Orge (FR)
(74) Mandataire: Gevers & Orès
(86) Numéro de dépôt international: PCT/EP2010/058950
(87) Numéro de publication internationale: WO 2011/006746

(56) Documents cités:
- EP-A- 1 632 431
- DE-C- 941 109
- FR-A- 1 473 951
- US-A- 2 371 699

## Description

Le domaine de la présente invention est celui des atterrisseurs pour aéronefs et plus particulièrement celui des systèmes de commande de leur train avant, en relevage et en direction.

Les aéronefs, et en particulier les avions de transport de passagers, ont un train d'atterrissage composé généralement d'un train principal constitué par deux ensembles de roues situés chacun sous une des ailes de l'avion ou sous le fuselage, et d'un train avant situé à proximité de l'extrémité avant du fuselage. Ce train avant assure, outre le soutien du poids de l'avion, une fonction de direction lors du roulage au sol. Il est en outre repliable, comme le train principal, pour pouvoir être logé dans le fuselage après le décollage et éviter des forces de frottement aérodynamiques, dites de trainée, qui, en s'exerçant sur lui, augmenteraient la consommation de carburant.

Ce train est, de façon classique, actionné par deux systèmes de vérin qui assurent, pour l'un, la fonction de relevage afin de le faire entrer dans le fuselage après le décollage et, pour l'autre, la fonction de direction en faisant tourner ses roues dans un sens ou dans l'autre autour de l'axe vertical du train afin de diriger l'avion lorsque celui-ci est au roulage au sol.

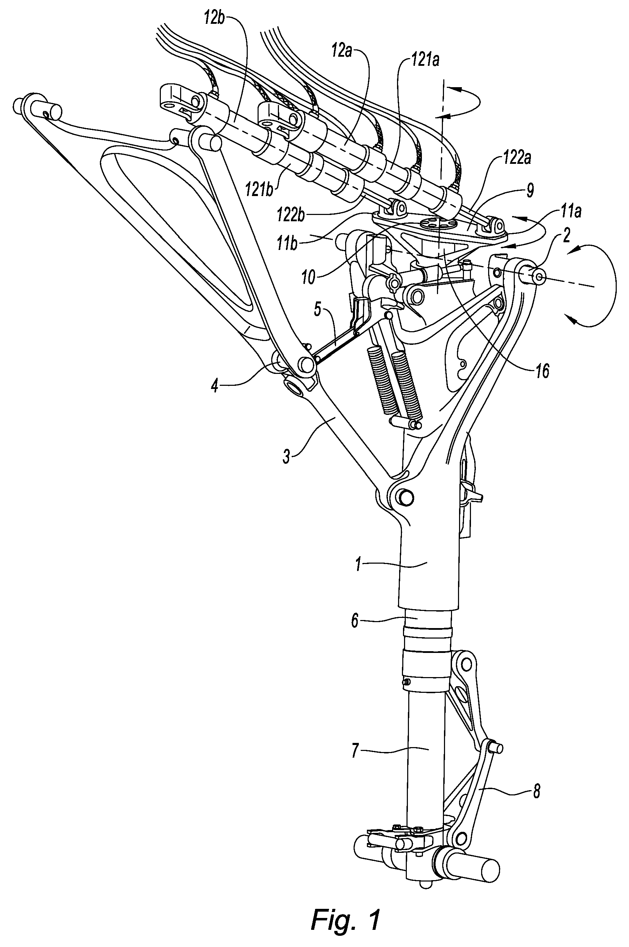

En référence à la figure 1, un train avant d'atterrissage comprend classiquement une pièce structurale ou fût 1 qui se termine à sa partie supérieure par des bras qui forment un axe de rotation 2 autour duquel s'effectue le relevage du train. L'axe 2 est monté sur une pièce structurelle de la cellule de l'avion de façon à porter le poids du train avant lorsque l'avion est en vol et à transmettre au train le poids de la partie avant de l'avion lorsque l'avion est au sol. Cet axe autorise le relevage du fût 1 lors de la rentrée du train d'atterrissage, sous l'action du ou des vérins de relevage 12a et 12b. Le fût est relié à la structure de l'avion, d'une part par l'axe de relevage 2 et, d'autre part, par une contre-fiche, dite contre-fiche principale 3, présentant une articulation 4 pour permettre son pliage lors de la rentrée du train. Cette contre-fiche principale a pour fonction d'empêcher le repliement intempestif du train lors d'une sollicitation extérieure sur le train, telle par exemple que l'impact des roues sur le sol à l'atterrissage. Une contre-fiche secondaire 5 se déploie à la sortie du train et vient empêcher le repliage de la contre-fiche 3. Elle est elle-même repliable pour pouvoir être escamotée sous l'action d'un vérin commandé lors de la rentrée du train, et ainsi autoriser le repliage de la contre-fiche principale 3 et la remontée du fût 1 dans le fuselage.

Le fût 1 a classiquement la forme d'un cylindre creux dans lequel est placé un tube tournant 6. Le tube tournant est maintenu longitudinalement en place dans le fût par des moyens connus de l'homme du métier et est mobile en rotation pour permettre la mise en application de la consigne de direction donnée par le pilote lors du roulage. Lors de la rentrée du train après le décollage, le tube tournant est préalablement rappelé, par un système qui peut être interne ou externe au fût, dans une position de repos qui correspond à la mise dans l'axe de l'avion des roues du train avant. Généralement, un système mécanique intégré au train, vient confirmer lors du décollage et donc lors de l'extension de l'amortisseur, l'alignement de la roue.

Le tube tournant est lui-même creux et laisse se déplacer en son sein une tige coulissante 7 qui fait saillie vers le bas du tube tournant et qui porte l'essieu des roues du train avant. La tige coulissante 7 est fixée au tube tournant par un amortisseur de façon à se déplacer à l'intérieur du fût en fonction des forces verticales qui s'appliquent sur les roues et à revenir à une position médiane qui correspond, au repos, à l'équilibre entre le poids supporté par le train avant et la force de réaction dudit ressort. Une liaison est assurée entre la tige coulissante 7 et le tube tournant 6 par un ensemble de pièces dénommées compas 8 qui permet la transmission à la tige coulissante de l'orientation donnée au tube tournant et donc le pilotage en direction des roues de l'avion. L'ensemble compas 8 est constitué par deux bielles articulées ; une première bielle est attachée, à une des ses extrémités, à un axe horizontal lié à la tige et à l'autre extrémité à une des extrémités de la seconde bielle ; l'autre extrémité de la seconde bielle est attachée à un axe horizontal lié au tube tournant 6. Les extrémités communes des deux bielles sont fixées l'une à l'autre autour d'un axe horizontal commun.

Grâce à l'amortisseur implanté dans le tube tournant, la tige coulissante 7 est capable d'absorber les chocs qui s'exercent sur les roues, en se déplaçant verticalement. Lors des mouvements de la tige coulissante 7 l'ensemble compas 8 se déforme en restant dans un plan radial par rapport au fût et contraint ainsi les roues à rester dans une direction fixe par rapport au tube tournant 6. Le pilotage en direction des roues s'effectue ainsi par le pilotage en rotation du tube tournant 6.

De nombreux systèmes ont été imaginés pour commander le train avant d'un aéronef, que ce soit pour son repliage dans un logement prévu à cet effet dans le fuselage de l'aéronef, ou pour assurer le pilotage en direction lors du roulage au sol. Comme indiqué précédemment, ils sont généralement constitués par deux système de vérins dont l'un agit sur le fût 1 du train avant afin de le relever après le décollage et de le déplier avant l'atterrissage et dont l'autre agit sur le tube tournant 6, afin d'orienter les roues.

Le ou les vérins assurant le relevage sont fixés à la structure de l'aéronef et agissent, soit en traction soit préférentiellement en compression, sur un point d'appui qui peut être situé sur le fût soit au dessus soit au dessous de l'axe de relevage 2, selon la configuration géométrique retenue. Les vérins de direction, préférentiellement au nombre de deux, agissent sur le tube tournant à un point situé généralement en dessous du fût 1.

On connait par ailleurs (demandes de brevet FR 1473951 et DE 941109) des systèmes d'orientation du train avant qui permettent de faire pivoter le tube tournant 6 pour que la roue effectue un quart de tour et s'intègre plus facilement dans le fuselage lors de la rentrée du train. Les dispositifs qui génèrent cette rotation sont généralement rattachés à des points d'appui positionnés sur le tube tournant dans la partie haute du train mais ils ne sont dimensionnés que pour assurer le pivotement du tube tournant, équipé de la partie coulissante et des roues, dans le fût. Ils ne sont pas aptes à supporter les efforts appliqués au fût lors du relevage du train.

Les configurations décrites ci-dessus ont pour inconvénient que plusieurs équipements du train avant (vérins de direction, canalisations d'alimentation et points d'accrochage de ces vérins, sont situés en position basse sur le train et donc placés hors du fuselage lorsque le train est sorti. Ces équipements sont alors placés dans le vent de l'avion, ce qui génère des bruits aérodynamiques et une trainée dommageable pour réglementation, de réduire autant que possible les causes de génération de bruit et, d'une façon constante, de réduire le plus possible la trainée globale de l'avion. Pour cela il est préférable de positionner les équipements de commande du train avant, le plus haut possible à l'intérieur du fuselage. Ceci suppose de réduire le nombre et/ou le volume et/ou la masse de ces équipements.

La présente invention a pour but de remédier à ces inconvénients en proposant un train avant pour aéronef qui ne présente pas certains au moins des inconvénients de l'art antérieur et, en particulier, qui permette de réduire le nombre et la masse des équipements nécessaires à son relevage et à la commande de sa direction.

A cet effet, l'invention a pour objet un train d'atterrissage d'aéronef selon la revendication indépendante 1.

En positionnant le point d'appui de relevage sur le tube tournant et en le dimensionnant pour qu'il supporte les efforts générés lors du relevage, on peut regrouper les moyens de relevage et de direction du train avant et ainsi réduire leur volume et leur masse. On peut alors les positionner plus facilement dans la partie haute du logement prévu pour le train et éviter les bruits aérodynamiques indésirables.

Avantageusement le point d'appui pour le relevage du fût est confondu avec le point d'appui pour un moyen de mise en rotation du tube tournant autour de son axe de pivotement.

L'unicité d'un point d'appui permet de n'utiliser qu'un seul moyen pour actionner le relevage/déploiement du train et pour l'orienter, et ainsi de réduire le volume des moyens correspondants et de les positionner facilement à l'intérieur du fuselage. On évite ainsi la génération de bruits aérodynamiques indésirables.

Dans un autre mode particulier de réalisation l'extrémité supérieure du tube tournant comporte deux extensions latérales positionnées de part et d'autre de l'axe de pivotement du tube tournant.

Avantageusement lesdites extensions latérales forment un té fixé sur l'extrémité supérieure dudit tube tournant par des moyens de fixation.

L'invention porte également sur un aéronef comportant un train avant tel que décrit ci-dessus.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence au dessin schématique annexé.

Sur ce dessin :
- la figure 1 est une vue générale d'un train avant d'avion selon un mode de réalisation de l'invention ;

En se référant à la figure 1, on voit un train avant composé d'un fût 1 porté par deux bras formant l'axe de relevage 2 et une contre-fiche principale 3 bloquée en position dépliée par une contre-fiche secondaire 5. Le fût renferme un tube tournant 6 duquel s'étend une tige coulissante 7, le bas de la tige coulissante étant relié au fût 1 par le compas 8.

Dans l'invention telle que représentée le tube tournant 6 traverse le fût 1 sur toute la longueur et en fait saillie par sa partie supérieure 16. Sur cette partie supérieure est fixé, par des moyens de fixation du type boulons 10, un té de relevage 9. Ce té s'étend au dessus de l'axe de relevage 2 et ses deux extensions latérales 11a et 11b sont alignées avec l'axe des roues du train avant. Les extensions latérales, en restant, en utilisation, constamment parallèles à l'axe des roues, servent de points d'appui pour des moyens de mise en rotation du tube tournant ce qui permet la commande de la direction du train avant lors du roulage au sol.

Sur ces extrémités 11a et 11b sont attachées, à l'aide d'une attache comportant deux degrés de liberté en rotation, deux vérins 12a et 12b qui servent, selon l'invention, à la fois au relevage et à la commande de direction du train avant. Un premier degré de liberté correspond à une rotation selon un axe parallèle à l'axe de relevage 2 et le second correspond à une rotation selon un axe parallèle à l'axe de pivotement. Ces vérins sont attachés d'un côté sur les extrémités 11a et 11b du té de relevage 9 et de l'autre côté sur la structure de l'aéronef, à l'aide également d'une attache à deux degrés de liberté en rotation. Ces attaches permettent classiquement aux vérins d'exercer leur effort tout en suivant les évolutions d'alignement imposées par le déplacement du fût lors de la rentrée ou de la sortie du train.

Les vérins représentés sont des vérins hydrauliques à double action, c'est-à-dire des vérins comportant, pour chacun, deux dispositifs agissant en série sur l'élongation de la tige du vérin.

Chaque vérin 12a, 12b comporte deux chambres dans lesquelles s'exercent les pressions et qui agissent en série sur deux éléments mobiles. Une première chambre actionne une première tige 121a, 121b qui porte elle-même une deuxième chambre qui actionne une seconde tige 122a, 122b. Des moyens d'amenée et de retour du fluide sous pression sont associés à ces chambres, de façon classique.

Chacun de ces dispositifs a son propre système de commande de l'élongation demandée à la tige. Un premier dispositif, associé aux premières chambres et aux premières tiges agit sur la descente ou le relevage du fût 1 en raccourcissant ou allongeant les premières tiges 121a, 121b des deux vérins ; les deux premiers dispositifs agissent de façon simultanée sur les deux vérins, avec la même ampleur, de sorte que le té 9 reste perpendiculaire à l'axe longitudinal de l'avion et force le train à descendre ou à se relever. Pour commander l'orientation du train avant les seconds dispositifs agissent sur les élongations des secondes tiges 122a, 122b des vérins, dans des sens opposés, avec des ampleurs égales. Cette fonction n'est activée que lorsque le train est bas, c'est à dire que lorsque le premier dispositif a préalablement positionné le fût 1 en position verticale.

L'invention a été illustrée sur la figure 1 avec des vérins hydrauliques présentant deux chambres de pression situées l'une derrière l'autre dans le corps du vérin, mais elle peut tout aussi bien être réalisée avec un vérin avec une seule chambre de pression, ou avec un vérin électrique. Dans ce cas la longueur à donner à l'élongation de la tige pour chaque vérin est définie, par un système de commande approprié, comme la somme algébrique des élongations souhaitées pour le relevage/descente du fût et pour l'orientation à donner au té 9.

Elle est également illustrée avec deux vérins, rattachés chacun à une des extensions latérales 11a et 11b mais il serait envisageable de n'utiliser qu'un seul vérin, attaché à une extension latérale, le deuxième vérin étant remplacé par des dispositifs de blocage de la seconde extension latérale du té : un blocage en rotation autour de l'axe de pivotement du tube tournant lors de la rentrée/sortie du train et un blocage en rotation autour de son axe de relevage 2 lors du roulage au sol. La commande du vérin unique et de la mise en place des blocages seront adaptées en conséquence par l'homme du métier pour tenir compte du type d'action envisagée sur le train avant.

On va maintenant décrire le déroulement d'une sortie du train avant, suivie d'un roulage au sol après l'atterrissage.

Lorsque le pilote décide de sortir le train pour l'atterrissage, il envoie une commande identique aux deux vérins 12a et 12b de façon à entraîner la rentrée symétrique des deux premières tiges 121a et 121b dans le premier corps de leur vérin. Les extrémités des deux vérins agissent, à leur tour, de façon symétrique sur les deux extensions latérales 11a et 11b du té 9, ce qui entraîne la rotation du tube tournant 6, et par conséquent la descente du fût 1, par rotation autour de l'axe de relevage 2. Une fois le train descendu les deux premières tiges 121a et 121b sont maintenues en position rétractée et éventuellement verrouillées de façon connue pour empêcher une remontée inopinée du train. Les deuxièmes tiges 122a et 122b se trouvent alors pré-positionnées dans une position médiane, permettant un déplacement dans les deux sens de leur extrémité et partant, un déplacement des extensions latérales 11a et 11b, dans un sens ou dans l'autre, le long de la direction longitudinale de l'avion.

Lors du roulage au sol le pilote envoie une consigne de rotation dans un sens ou dans l'autre au système de commande du train avant. Ce système envoie alors une commande de déploiement à l'une des secondes tiges 122a ou 122b et concomitamment une commande de rétractation de même ampleur à l'autre seconde tige. Les deux extensions latérales se déplaçant d'une longueur égale et dans des sens opposés, le té 9 est entraîné en rotation autour de son axe. Il entraîne alors, par l'intermédiaire du compas 8 le moyeu des roues d'un angle égal à celui qu'il a subi, ce qui permet l'orientation des roues pour le roulage au sol.

Inversement lorsque le pilote commande la rentrée du train le système de commande déverrouille la contre-fiche secondaire 5 et envoie un ordre aux secondes tiges 122a et 122b pour qu'elles prennent la même élongation et qu'ainsi les roues se placent dans l'axe de l'avion. Une fois cet alignement réalisé, le système ordonne le déploiement des premières tiges 121a et 121b de façon symétrique, ce qui repousse les extensions latérales 11a et 11b et provoque la remontée du fût 1 et la rentrée du train avant dans le fuselage.

Bien que l'invention ait été décrite en relation avec un mode de réalisation particulier, il est bien évident qu'elle comprend tous les équivalents techniques des moyens décrits ainsi que leurs combinaisons si celles-ci entrent dans le cadre de l'invention tel que défini par le texte des revendications.

## Revendications

1. Train d'atterrissage d'aéronef comprenant un fût (1) comportant deux bras formant axe de rotation (2) pour le relevage du train, un tube tournant (6) monté mobile en rotation à l'intérieur dudit fût autour d'un axe de pivotement et s'étendant au delà de l'axe de relevage (2) par rapport à la position de la- ou lesdites roues, et une tige coulissante (7) mobile en translation dans ledit tube tournant (6) le long dudit axe de pivotement et portant à une de ses extrémités la ou les roues dudit train, ledit train étant en outre équipé d'au moins un moyen de mise en rotation (12a, 12b) du fût (1) autour de l'axe de relevage (2) par coopération, d'une part, avec la structure de l'aéronef et, d'autre part, avec un point d'appui (11a, 11b) positionné sur un des éléments dudit train à distance de l'axe de relevage (2),
**caractérisé en ce que** ledit point d'appui est constitué par une extension latérale (11a, 11b) de l'extrémité supérieure (16) du tube tournant (6) située du côté opposé à la- ou lesdites roues par rapport à l'axe de relevage (2).

2. Train d'atterrissage selon la revendication 1 dans lequel ledit point d'appui (11a, 11b) est positionné à distance de l'axe de pivotement de façon à permettre la mise en rotation du tube tournant (6) autour de son axe de pivotement par l'intermédiaire dudit moyen de mise en rotation du fût (12a, 12b).

3. Train d'atterrissage selon la revendication 2 dans lequel l'extrémité supérieure (16) du tube tournant comporte deux extensions latérales (11a, 11b) positionnées de part et d'autre de l'axe de pivotement du tube tournant (6).

4. Train d'atterrissage selon la revendication 3 dans lequel lesdites extensions latérales forment un té (9) fixé sur l'extrémité supérieure dudit tube tournant (6) par des moyens de fixation (10).

5. Train d'atterrissage selon l'une des revendications 3 ou 4 dans lequel ledit moyen de mise en rotation est constitué par deux vérins (12a, 12b) agissant respectivement sur lesdites extensions latérales (11a, 11b), le relevage ou la descente du train étant assuré par une élongation simultanée et de même ampleur des tiges des deux vérins et le pivotement du train étant assurée par une élongation dans des sens opposés et de même ampleur desdits vérins.

6. Train d'atterrissage selon la revendication 5 dans lequel lesdits vérins (12a, 12b) comportent respectivement une première tige (121a, 121 b) définissant une première élongation dudit point d'actionnement et une seconde tige (122a, 122b) définissant une seconde élongation dudit point d'actionnement, les deux tiges (121a et 122a, 121b et 122b) étant positionnées dans l'axe l'une de l'autre et agissant en série pour définir l'élongation globale dudit point d'actionnement.

7. Train d'atterrissage selon la revendication 6 dans lequel les vérins (12a, 12b) sont des vérins hydrauliques comportant une première et une deuxième chambres de pression actionnant respectivement les première et deuxième tiges(121a et 122a, 121b et 122b), la première tige (121a, 121 b) portant la deuxième chambre de pression.

8. Train d'atterrissage selon la revendication 4 dans lequel ledit moyen de mise en rotation est constitué par un vérin (12a, 12b) agissant sur une extension latérale (11a) dudit té, ledit train comportant en outre un premier dispositif apte à assurer un blocage en rotation du tube tournant (6) autour de l'axe de pivotement pour permettre le relevage du train et un second dispositif apte à assurer un blocage en rotation du fût (1) autour de son axe de relevage (2) pour permettre le roulage au sol.

9. Train d'atterrissage selon la revendication 8 dans lequel ledit moyen de mise en rotation comporte une première tige (121a, 121 b) définissant une première élongation dudit point d'actionnement et une seconde tige (122a, 122b) définissant une seconde élongation dudit point d'actionnement, les deux tiges (121a et 122a, 121b et 122b) étant positionnées dans l'axe l'une de l'autre et agissant en série pour définir l'élongation globale dudit point d'actionnement.

10. Aéronef comportant un train avant selon l'une des revendications ci-dessus.

## Patentansprüche

1. Fahrwerk eines Flugzeugs mit einem Schaft (1), der zwei Arme umfasst, die eine Rotationsachse (2) für das Anheben des Fahrwerks bilden, einem Drehrohr (6), das drehbar im Inneren des Schafts um eine Schwenkachse angebracht ist, und sich über die Hebeachse (2) hinaus mit Bezug auf eine Position des oder der Räder befindet, und einer verschiebbaren Stange (7), die in dem Drehrohr (6) entlang der Schwenkachse verschiebbar ist und an einem seiner Enden das oder die Räder des Fahrwerks trägt, wobei das Fahrwerk mit zumindest einem Mittel zum Drehen (12a, 12b) des Schafts (1) um die Hebeachse (2) durch Zusammenwirken einerseits mit der Struktur des Flugzeugs und andererseits mit einem Stützpunkt (11 a, 11 b), der über einem der Elemente des Fahrwerks von der Hebeachse (2) beabstandet positioniert ist, ausgestattet ist,
**dadurch gekennzeichnet, dass** der Stützpunkt aus einer lateralen Verlängerung (11a, 11 b) des oberen Endes (16) des Drehrohrs (6) besteht, die sich auf der Seite gegenüber eines oder der Räder mit Bezug auf die Hebeachse (2) befindet.

2. Fahrwerk nach Anspruch 1, wobei der Stützpunkt (11a, 11 b) beabstandet von der Schwenkachse positioniert ist, um das Drehen des Drehrohrs (6) um seine Schwenkachse durch das Mittel zum Drehen des Schafts (12a, 12b) zu erlauben.

3. Fahrwerk nach Anspruch 2, wobei das obere Ende (16) des Drehrohrs zwei laterale Verlängerungen (11a, 11 b) umfasst, die auf beiden Seiten der Schwenkachse des Drehrohrs (6) positioniert sind.

4. Fahrwerk nach Anspruch 3, wobei die lateralen Verlängerungen ein T-Stück (9) bilden, das am oberen Ende des Drehrohrs (6) durch Befestigungsmittel (10) befestigt ist.

5. Fahrwerk nach einem der Ansprüche 3 oder 4, wobei das Mittel zum Drehen aus zwei Zylindern (12a, 12b) besteht, die jeweils auf die lateralen Verlängerungen (11a, 11 b) einwirken, wobei das Anheben oder Absenken des Fahrwerks durch eine gleichzeitige Verlängerung und ein gleiches Ausmaß der Stangen der zwei Zylinder sichergestellt wird, und wobei das Schwenken des Fahrwerks durch eine Verlängerung im umgekehrten Sinn und ein gleiches Ausmaß der Zylinder sichergestellt wird.

6. Fahrwerk nach Anspruch 5, wobei die Zylinder (12a, 12b) jeweils eine erste Stange (121 a, 121b), die eine erste Verlängerung des Einwirkungspunkts definiert, und eine zweite Stange (122a, 122b), die eine zweite Verlängerung des Einwirkungspunkts definiert, umfassen, wobei die zwei Stangen (121 a und 122a, 121 b und 122b) in der Achse von der einen und der anderen positioniert sind und in Reihe wirken, um die gesamte Verlängerung des Einwirkungspunkts zu definieren.

7. Fahrwerk nach Anspruch 6, wobei die Zylinder (12a, 12b) hydraulische Zylinder sind, die eine erste und zweite Druckkammer umfassen, die jeweils auf die erste und zweite Stange (121 a und 122a, 121 b und 122b) einwirken, wobei die erste Stange (121 a, 121 b) die zweite Druckkammer trägt.

8. Fahrwerk nach Anspruch 4, wobei das Mittel zum Drehen aus einem Zylinder (12a, 12b) besteht, der auf die laterale Verlängerung (11a) des T-Stücks einwirkt, wobei das Fahrwerk außerdem eine erste Einrichtung, die geeignet ist, um ein Blockieren der Drehung des Drehrohrs (6) um die Schwenkachse sicherzustellen, um das Anheben des Fahrwerks zu erlauben, und eine zweite Einrichtung, die geeignet ist, um ein Blockieren der Drehung des Schafts (1) um seine Hebeachse (2) sicherzustellen, um das Rollen am Boden zu erlauben, aufweist.

9. Fahrwerk nach Anspruch 8, wobei das Mittel zum Drehen eine erste Stange (121 a, 121b), die eine erste Verlängerung des Einwirkungspunkts definiert, und eine zweite Stange (122a, 122b), die eine zweite Verlängerung des Einwirkungspunkts definiert, umfasst, wobei die zwei Stangen (121 a und 122a, 121 b und 122b) in der Achse von der einen und der anderen positioniert sind und in Reihe wirken, um die gesamte Verlängerung des Einwirkungspunkts zu definieren.

10. Flugzeug mit einem Fahrwerk nach einem der vorherigen Ansprüche.

## Claims

1. An aircraft landing gear comprising a leg (1) comprising two arms forming a pivot (2) for retracting the landing gear, a rotary tube (6) mounted so that it can turn inside said leg about a pivot axis and extending beyond the retraction pivot (2) with respect to the position of said wheel(s), and a sliding rod (7) capable of translational movement inside said rotary tube (6) along said pivot axis and bearing at one of its ends the wheel or wheels of said landing gear, said landing gear being further fitted with at least one means (12a, 12b) for rotating the leg (1) about the retraction pivot (2) through collaboration, on the one hand, with the structure of the aircraft and, on the other hand, with a fulcrum (11 a, 11 b) positioned on one of the elements of said landing gear distant from the retraction pivot (2), **characterized in that** said fulcrum consists of a lateral extension (11 a, 11 b) of the upper end (16) of the rotary tube (6), on the opposite side of said wheel or wheels with respect to the retraction pivot (2).

2. The landing gear as claimed in claim 1, in which said fulcrum (11 a, 11 b) is positioned some distance from the pivot axis so as to allow the rotary tube (6) to be rotated about its pivot axis by said means (12a, 12b) of rotating the leg.

3. The landing gear as claimed in claim 2, in which the upper end (16) of the rotary tube comprises two lateral extensions (11 a, 11 b) positioned one on each side of the pivot axis of the rotary tube (6).

4. The landing gear as claimed in claim 3, in which said lateral extensions form a tee (9) fixed to the upper end of said rotary tube (6) by fasteners (10).

5. The landing gear as claimed in claim 3 or 4, in which said rotating means consists of two actuators (12a, 12b) acting respectively on said lateral extensions (11 a, 11 b), the landing gear being retracted or lowered by simultaneously elongating the moving assemblies of the two actuators by the same amplitude and the landing gear being pivoted by elongating said moving assemblies in opposite directions but by the same amplitude.

6. The landing gear as claimed in claim 5, in which said actuators (12a, 12b) respectively comprise a first moving assembly (121 a, 121 b) defining a first elongation of said actuating point and a second moving assembly (122a, 122b) defining a second elongation of said actuating point, the two moving assemblies (121 a and 122a, 121b and 122b) being positioned on the axis of one another and acting in series to define the overall elongation of said actuating point.

7. The landing gear as claimed in claim 6, in which the actuators (12a, 12b) are hydraulic actuating cylinders comprising a first and a second pressure chamber respectively actuating the first and second moving assemblies (121 a and 122a, 121b and 122b), the first moving assembly (121 a, 121 b) carrying the second pressure chamber.

8. The landing gear as claimed in claim 4, in which said rotating means consists of an actuator (12a, 12b) acting on said lateral extension (11 a, 11 b), said landing gear further comprising a first device capable of blocking the rotation of the rotary tube (6) about the pivot axis to allow the landing gear to be retracted and a second device able to block the rotation of the leg (1) about its retraction pivot (2) to allow taxiing on the ground.

9. The landing gear as claimed in claim 8, in which said rotating means comprises a first moving assembly (121 a, 121 b) defining a first elongation of said actuating point and a second moving assembly (122a, 122b) defining a second elongation of said actuating point, the two moving assemblies (121 a and 122a, 121b and 122b) being positioned on the axis of one another and acting in series to define the overall elongation of said actuating point.

10. An aircraft comprising a nose landing gear according to one of the previous claims.
